# EUROPEAN PATENT APPLICATION

(11) **EP 1 404 081 A1**
(43) Date of publication of application: **31.03.2004**
(21) Application number: 02292397.3
(22) Date of filing: 27.09.2002
(51) Int. Cl.: H04L 29/06, H04Q 11/04, H04L 12/28, H04L 12/56

(54) **Method for establishing a connection between subscribers and service providers granted by an authentication server**

(71) Applicant: ALCATEL, 75008 Paris (FR)
(72) Inventor: Claes, Erik Johan Chris, 2610 Wilrijk (BE); De Clercq, Jeremy, 9000 Gent (BE); De Neve, Hans Maria Paul, 2300 Turnhout (BE); Goderis, Danny José, 1731 Relegem (BE); Ooghe, Sven, 9000 Gent (BE); T'Joens, Yves Robert Fernand, 8200 Sint Michiels-Brugge (BE); Van de Voorde, Ingrid Zulma Benoît, 1861 Wolvertem (BE)
(74) Representative: Narmon, Gisèle Marie Thérèse

(57) **Abstract**

The present invention relates to the abiliy to set up connections on demend between subscribers and service providers and allows network capacity to be best shared amoung users. Whenever a service terminal (ST) requests a service (S) from a service provider (SP), an authentication server (AUTH) checks whether the service terminal can access the requested service. If so, a network controller (CTRL) sets up a communication path (P) to deliver the requested service with the required quality of service, said path being established between the network termination (NT) whereto the service terminal is coupled, and the access server (AS) whereto the service provider is coupled. The access server and the network termination comprise forwarding means (FW1,FW2) adapted to discriminate the traffic related to said service and to forward it to the appropriate path, thereby establishing the end to end connection (C) between the service terminal and the service provider. The authentification server supplies information elements and forwarding criteria for establishing the end to end connection, based on the transport requirements of the service to be delivered.

## Description

The present invention relates to a method for establishing a connection between a service terminal and a service provider across a telecommunication network, as defined in the preamble of claim 1, to a telecommunication network adapted to connect a service terminal to a service provider, as defined in the preamble of claim 5, to a network controller adapted to establish connections across a telecommunication network, as defined in the preamble of claim 10, to an authentication server adapted to grant or deny a service terminal the access to a service, as defined in the preamble of claim 13, and to a network termination adapted to couple a service terminal to a telecommunication network, as defined in the preamble of claim 17.

Such a method is already known in the art, e.g. from the document entitled '*Auto-Configuration for Basic Internet (IP-based) Services',* published by the DSL forum on December 2001, reference TR-044. Therein, a method is described for automatically configuring connections between a subscriber and a service provider.

The scope of the known method is restricted to an Asynchronous Transfer Mode (ATM) based broadband network delivering Internet Protocol (IP) based services.

At one side of the broadband network - referred to as the root side - stand service providers. At the opposite side of the broadband network - referred to as the leaf side - stand subscribers.

The service providers includes Internet Service Providers (ISP), content providers, etc. An ISP is for connecting to the Internet and provides services such as e-mail and web hosting. A content provider consists of a server farm for distributing content, such as high definition video, etc.

A service provider is coupled to the broadband network via an access server, such as a Broadband Access Server (BAS). A network element of the telecommunication network whereto an access server is coupled is referred to as a root node.

A subscriber accommodates one or more service terminal, such as a personal computer, a digital TV set, etc, possibly interconnected by a Local Area Network (LAN).

A service terminal is coupled to the broadband network via a network termination, such as a Digital Subscriber Line (DSL) modem. A network element of the broadband network whereto a network termination is coupled is referred to as a leaf node.

The broadband network in the known method comprises:
- an access network,
- a regional broadband network.

The access network encompasses access nodes at Central Offices (CO) and local loops that connects subscribers to the COs. The access node is coupled to the regional broadband network, which is an ATM based core network that interconnects the COs in a geographical area.

Sometimes, both the access network and the regional broadband network are under the same administrative authority and, as such, are straightforwardly shortened as access network.

ATM is a candidate technology for the transport layer between the subscriber and the service provider. ATM is a connection-oriented cell-based transport technique and is intended to support a wide variety of services and applications.

ATM defines a two-level hierarchical connection scheme:
- the Virtual Channel (VC) is a connection between two end systems for a specific service or application,
- the Virtual Path (VP) is a connection between two ATM nodes that aggregates a large number of simultaneous VCs.

Each virtual connection is allotted an identifier, which has only local significance. This identifier comprises:
- a Virtual Channel Identifier (VCI) of the VC supporting that connection,
- a Virtual Path Identifier (VPI) of the VP over which the VC is aggregated.

A connection can be initiated by any of the two end systems terminating the connection or can be provisioned by a third party, such as a network manager. Connections related to the first case are referred to as switched connections, e.g. Switched Virtual Channel (SVC), connections related to the second case are referred to as permanent connections, e.g. Permanent Virtual Channel (PVC) or Permanent Virtual Path (PVP). An intermediate option exists when a third party requests a system to set up a virtual connection up to a pre-determined remote system, without the need for addressing each node individually. Connections related to this last case are referred to as soft permanent connections.

The connection-oriented mode of operation allows the network to check whether enough resources are available for a connection and then to commit some Quality of Service (QoS) for that connection. The bandwidth and the QoS required for a connection are negotiated at connection set up time. The network can reserve therefrom the appropriate resources for that connection. The network guarantees that the congestion of the network resources will only occur with a very low pre-determined probability.

An object of the known method is to outline the procedure for establishing a connection between a service terminal and a service provider.

The known method presupposes the following working assumptions:
- a communication path, such as a PVC, has been established across the telecommunication network between a network termination whereto the service terminal is coupled and an access server whereto the service provider is coupled,
- the configuration of the network termination has been achieved via an Integrated Local Management Interface (ILMI).

ILMI is a protocol that enables a network termination to obtain configuration data directly from the network without involving the end user. Said configuration data include ATM connectivity data, such as the list of all the PVCs provisioned for that subscriber at the User Network Interface (UNI), their respective transfer capabilities, etc, and access protocol data, such as the identity of the access protocol to connect to the service provider, the encapsulation method to be used, the name of the service provider, etc. Configuration data are transmitted over a pre-determined control channel using Simple Network Management Protocol (SNMP). The control channel is a PVC provisioned at the UNI, the VPI/VCI of which being preliminary known by the network termination.

Next, the network termination or the service terminal establishes a session with the service provider. In the event of the network termination establishing the session, the network termination uses the access protocol data retrieved via ILMI. In the event of the service terminal establishing the session, the service terminal uses some persistent data it holds, the foregoing access protocol data being used by the network termination to encapsulate the subscriber's traffic in ATM cells.

Various access protocols have been specified to connect to service providers, such as Point to Point Protocol (PPP), direct IP, etc. Notwithstanding that variety, the session establishment goes through the main steps of:
- possibly, establishing the data link connection,
- authenticating the subscriber, granting or denying the subscriber the access to the service he asks for, and possibly, accounting that subscriber the use of that service,
- configuring network control parameters, such as assigning a public IP address to the subscriber, etc.

Thereupon, a service terminal is ready for exchanging IP datagrams with the service provider following the client/server paradigm.

Multiple sessions may be established with multiple service providers, e.g.:
- multiple service terminals open dedicated sessions with multiple service providers through the same network termination (a digital TV set with a video on-line provider, a phone set with a Voice over IP (VoIP) provider, a Personal Computer (PC) with an ISP, etc),
- the network termination opens as many sessions as service providers configured, irrespective of the volume, the nature and the chronology of the traffic to be submitted thereto.

The known method does not address the issue of dispatching the traffic to the right destination, more specifically the issue of forwarding in the network termination the traffic related to a service provider to the path bound to that service provider.

Methods for forwarding in the network termination the traffic related to a service provider to the path bound to that service provider are various, depending mostly on the layer at which the forwarding is done (bridged mode, tunneling mode, routed mode).

An example interalia of such a method is an Ethernet bridge (bridged mode). An Ethernet bridge extends the LAN up to the access server by echoing Ethernet frames over the telecommunication network. During the preliminary broadcast traffic, e.g. during the Address Resolution Protocol (ARP) traffic, the Ethernet bridge learns which equipment it is connected to by analyzing the source Medium Access Control (MAC) address of the Ethernet frames it receives (learning phase). Next, frames are forwarded based on their destination MAC address and only transmitted to the port that gets this MAC address attached. A port stands for a physical port, such as the port to which a service terminal is coupled, or a logical port, such as a PVC at the UNI.

Problem gets more tricky when multiple paths are provisioned between service providers and subscribers for conveying differentiated classes of service, that is to say classes of service having differentiated bandwidth and/or quality of service requirements. Indeed, the network termination is unable to delineate within the incoming data stream a service instance belonging to a class of service from another service instance belonging to another class of service, and therefore is unable to dispatch the traffic appropriately.

Besides, the material in the known method concerning SVC support is not complete and is subject for future work. The issue of establishing path on demand and getting the network termination ready for dispatching traffic to those paths is not tackled yet. As a matter of fact, most of the operators provision communication paths between service providers and subscribers. The downside of provisioning multiple paths for conveying differentiated classes of service is the waste of the network resources with respect to the network usage.

A first object of the present invention is to optimize the network resources while guaranteeing a quality of service to the subscribers.

A second object of the present invention is to provide a method for forwarding in a network termination the traffic related to a service instance requested by a service terminal from a service provider to a communication path bound to this service provider and supporting the class of service of this service instance.

According to the invention, the first object is achieved by the method defined in claim 1, by the telecommunication network defined in claim 5, by the network controller defined in claim 11, and by the authentication server defined in claim 13.

The telecommunication network is adapted to convey data traffic between any of its ports. The telecommunication network can be a broadband network, such as the one specified in the known method, a Wide Area Network (WAN), etc.

The telecommunication network further comprises a network controller that dynamically establishes a communication path in the event of a service being requested by a service terminal from a service provider and on the condition that an authentication server has granted the service terminal the access to the service. Thereby, the network resources are optimized by restricting their usage to the subscribers that have active service session running.

The communication path is established between a network termination, whereto the service terminal is coupled, and an access server, whereto the service provider is coupled.

The communication path stands for any label switch path established between 2 ports of the telecommunication network, such as an ATM virtual connection, a Multi Protocol Label Switching (MPLS) path, etc. The communication path may also stand for any amount of bandwidth available between 2 ports of the telecommunication network. The communication path may also consist of a plurality of path segments bound one to another by any means as known to the skilled person. Some of the segments might be initially provisioned, some might be established on demand in accordance with the present invention.

The network controller establishes the path by issuing management commands to agents housed by network elements of the telecommunication network. The agents carry out the requested operation and provides the network controller back with the outcome of the operation. The network controller may address one or more network elements for establishing the path. The network controller may also use any other means as known to the person skilled in the art.

A service stands for any client request and the subsequent data exchanges initiated thereby and up to the completion thereof. A service may stand for the initial dial-in service, the service terminal being accounted for the session establishment and the subsequent traffic as a whole. A service may also refer to a transaction with specific security requirements and/or bandwidth requirements and/or quality of service requirements and/or a specific accounting policy, such as requesting a video pointed by an Universal Resource Locator (URL).

The second mandatory feature of the present invention is that the authentication server is further adapted to provide information elements to the network controller for setting up the path or part of it. In so doing, the path is dimensioned so as to fit closely the needs expressed by the authentication server, which is de-facto aware about which type of service has been requested by the service terminal and the specific transport requirements of that service.

The authentication server may simply relay transport requirements from the service provider or may maintain its own database, clustered on a per service type basis.

The functions of authenticating a subscriber, authorizing the subscriber the access to the service, possibly accounting the subscriber the use of the service, and supplying service related data, may be may be span across multiple hosts interacting with each other. If so, the authentication server designates this cluster of interacting hosts, with respect to those functions.

Another characterizing embodiment of the present invention is defined in the claims 2, 6, 12, and 14.

Therein, the information elements supplied by the authentication server and used by the network controller for establishing the path are explicitly stated as including any of the following parameters:
- a source address of said path,
- a end address of said path,
- transfer capabilities of said path.

The source and the end address include the necessary pieces of information for unambiguously identifying the ports of the telecommunication network between which the path or the path segment(s) is to be set up.

The transfer capabilities stands for the bandwidth and/or the quality of service required to deliver the service to the service terminal with a pre-determined quality of service. If the telecommunication network is an ATM based network, the required bandwidth is expressed by means of traffic descriptors, featuring the way a source may transmit cells over the network and with which the network has to cope. The quality of service relates to the cell loss, the delay and the delay variation incurred by the cells transferred over a connection. Therewith, a VC with a suitable ATM service category is established across the telecommunication network.

The transfer capabilities need not be symmetrical since the data flowing from the service provider to the service terminal may differ in nature and in volume from the data flowing in the reverse direction.

The authentication server may provide the network controller with transfer capabilities expressed with respect to a data communication layer used for transferring data between the service terminal and the service provider, such as the IP layer. Such transfer capabilities needs to be translated with respect to the telecommunication network across which the service is conveyed, e.g. by including the overhead introduced by the access layers.

The second object is achieved by the method defined in claim 3, by the telecommunication network defined in claim 7, by the authentication server defined in claim 15, and by the network termination defined in claim 17.

The network termination comprise forwarding means adapted to forward the traffic related to a service instance to the path that has been established for that service instance.

To do so, the authentication server is further adapted to supply part or whole of the forwarding criteria used by the network termination for selecting out of the whole traffic the traffic related to that service instance.

The forwarding criteria are transmitted to the network termination by any means as known to the skilled person, such as ILMI, etc.

Although not claimed, the access server is adapted in a similar way, that is to say the access server is adapted to forward the traffic related to a service instance to the path that has been established for that service instance.

Another characterizing embodiment of the present invention is defined in the claims 4, 8, 16 and 18.

Therein, the network termination is assumed to forward the traffic based on Layer 2 (L2) protocol control information.

The forwarding criteria supplied by the authentication server and used by the network termination for forwarding the traffic related to a service instance to its respective path are explicitly stated as including any of the following parameters:
- a physical address of said service terminal,
- an identifier of a virtual local area network,
- an identifier of a class of service of said service.

The physical address stands for an address that uniquely identifies a physical port of a device, e.g. a MAC address if Ethernet is the underlying medium access protocol being used between the subscriber and the service provider.

An identifier of a virtual local area network can be used too, e.g. when a service terminal has active sessions with multiple service providers.

An identifier of a class of service, such as the Type of Service (ToS) field in the Ethernet header, can be used too, e.g. when multiple service instances belonging to different classes of service are being delivered to a service terminal.

For the entire connection to be effective, the service terminal and the service provider shall stamp the data packets in conformance with the forwarding criteria used in the network termination and in the access server.

Another characterizing embodiment of the present invention is defined in claim 9.

Therein, a first path segment is provisioned between the network termination and the leaf node. This first path segment conveys part or all of the subscriber's traffic, up to the extent of the available capacity on the local loop. The network controller is then adapted to establish in accordance with the present invention a second path segment between the leaf node and the access server. To achieve the end to end connection, the leaf node comprise forwarding means adapted to forward the traffic conveyed over the first path segment and related to a service instance to a second path segment that has been established for that service instance.

The authentication server is further adapted to supply part or whole of the forwarding criteria used by the leaf node for selecting out of the whole traffic the traffic related to that service instance.

This solution is rather elegant since it does not ask for new features in the network termination, which keeps on forwarding the traffic as usual, e.g. on a default path.

The last characterizing embodiment of the present invention is defined by claim 10. Therein, the leaf node is adapted to intercept control traffic from a subscriber and to forward it to an appropriate destination.

Control traffic mostly stands for the traffic related to the session establishment, such as Dynamic Host Configuration Protocol (DHCP) traffic, the traffic being forwarded to a server capable of dealing with such a traffic, such as a DHCP server.

This last embodiment is particularly useful in the event of no path being established yet between the network termination and the access server, yet some connectivity must be provided between the subscriber and the service provider, e.g. for the authentication procedure.

It is to be noticed that the term 'comprising', also used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
- fig. 1 represents a telecommunication system according to the present invention,
- fig. 2 represents the communication channels between the elements of the telecommunication system and the information flowing thereon,
- fig.3 represents an alternative embodiment wherein the traffic forwarding is taken over by the leaf node,

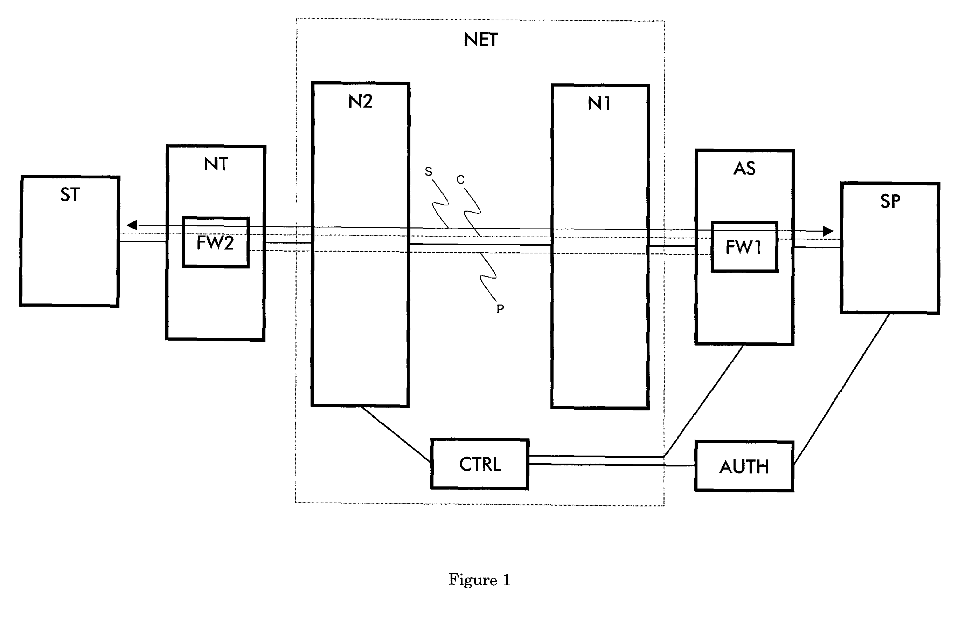

In a preferred embodiment of the present invention, the telecommunication system comprises the following constituents (see fig. 1):
- a telecommunication network NET,
- a service provider SP coupled to the telecommunication network NET via an access server AS,
- a service terminal ST coupled to the telecommunication network NET via a network termination NT,
- an authentication server AUTH.

The telecommunication network NET comprises the following distinctive network elements:
- a root node N1,
- a leaf node N2.

The telecommunication network NET further comprises a network controller CTRL.

The access server AS is coupled to the root node N1 and the network termination NT is coupled to the leaf node N2.

The leaf node N2 is coupled to the root node N1, possibly via intermediate network nodes.

The network controller CTRL is coupled to the leaf node N2, to the access server AS and to the authentication server AUTH.

The authentication server AUTH is coupled to the network controller CTRL and to the service provider SP.

In the preferred embodiment of the present invention, the telecommunication network NET is an ATM based broadband network delivering IP based services.

The root node N1 and the leaf node N2 comprise Input/Output (I/O) ports adapted to terminate an electrical or optical signal from an adjacent network node, such as a STM-16 optical signal.

As edge nodes of the telecommunication network NET, the root node N1 and the leaf node N2 further comprise I/O ports adapted to terminate an electrical or optical signal from a front end equipment wired to the telecommunication network NET, such as a DSL signal from a network termination or a STM-1 electrical signal from an access server.

The root node N1 and the leaf node N2 accommodate the necessary means for operating - i.e. originating, terminating or relaying - the data planes, the control planes and the management planes at each and every I/O ports and at each and every protocol layers.

The root node N1 and the leaf node N2 accommodate the basic functions of an ATM switching node. They comprise the necessary means for switching ATM cells from any incoming ATM virtual channel to any outgoing ATM virtual channel. They accommodate the necessary queuing means on the ATM egress ports and implement a suitable cell scheduling policy in association with ATM traffic management functions, including - but not restricted to - Control Admission Control (CAC), Usage Parameter Control (UPC), Network Parameter Control (NPC) and Cell Loss Priority (CLP).

As managed elements, the root node N1 and the leaf node N2 house a local agent for carrying out management operations upon request from a network manager. The root node N1 and the leaf node N2 implement a management interface to receive requests from a network manager and to send confirmation or autonomous reports to a network manager. An appropriate protocol suite supports that interface, such as one based on the Internet Engineering Task Force's (IETF) SNMP standards.

The root node N1 and the leaf node N2 may further comprise a dedicated I/O port to communicate with a network manager, such as a X.21 port coupled to a Public Switched Telephone Network (PSTN) via a modem. The root node N1 and the leaf node N2 may also use a dedicated VC of the telecommunication network NET, without the need for additional hardware. The later option is chosen for the preferred embodiment.

Management data and management operations are defined in a Management Information Base (MIB). The MIB abstracts the network resources of interest into managed objects and defines the management operations the managed objects may support.

The root node N1 and the leaf node N2 further comprises storage means to hold a local replica of the MIB - also referred to as local MIB -.

None of the foregoing components is shown for reasons of readability.

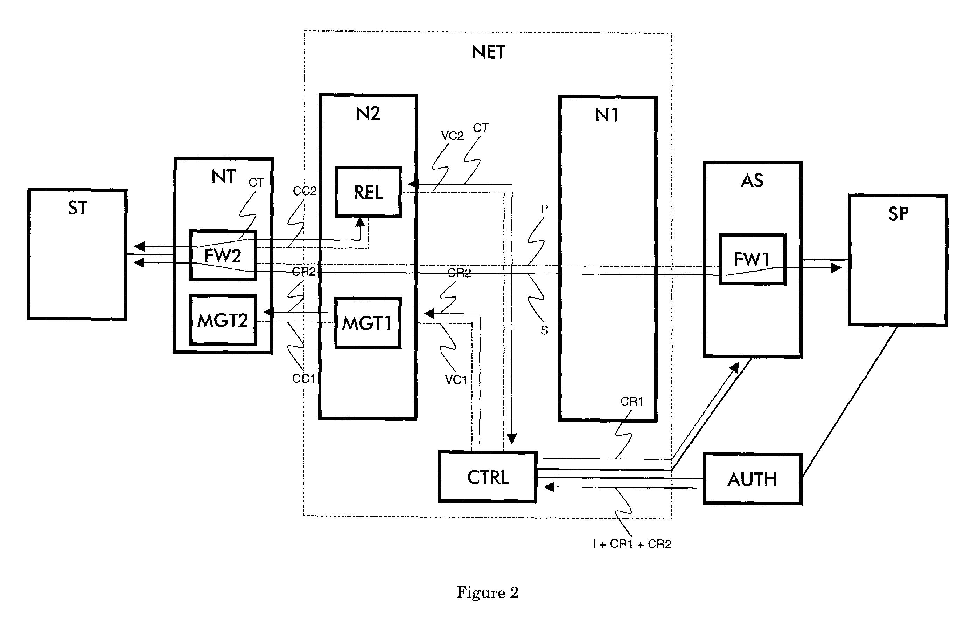

More specifically and with respect to the scope of the present invention (see fig. 2), the leaf node N2 further comprises local management means MGT1 adapted to transmit configuration data over a pre-determined control channel CC1 to the network termination NT.

In the preferred embodiment, the configuration data are transmitted via ILMI. The configuration data are excerpted from the local MIB of the leaf node N2 and modified by the agent thereof. ILMI and the MIB are amended so as to include on a per VC basis forwarding criteria, which the network termination NT shall use for forwarding subscriber's traffic.

The leaf node N2 further comprises relay means REL adapted to relay control traffic CT received over a pre-determined control channel CC2 to an appropriate destination.

In the preferred embodiment, the control traffic CT stands for the DHCP traffic. DHCP provides a framework for passing configuration parameters to IP hosts. DHCP consists of two components: a protocol for delivering host-specific configuration parameters and a mechanism for allocation of network addresses to hosts. DHCP is built on a client-server model, where the DHCP server host allocates network addresses and delivers configuration parameters to dynamically configured client hosts.

In the preferred embodiment, the relay means REL forwards the control traffic CT via a dedicated VC VC2 to the network controller CTRL, wherein it is appropriately processed. The DHCP traffic is encapsulated over ATM Adaptation Layer 5 (AAL5) using one of the encapsulation methods defined in the Request For Comment (RFC) 2684. The relay means REL places its own IP address into the gateway IP address field of the DHCP request and sends the DHCP request to the network controller CTRL.

The network termination NT is adapted to couple the service terminal ST to the telecommunication network NET.

The network termination NT comprises an I/O port - referred to as the network port - adapted to terminate an electrical or optical signal from the telecommunication network NET, such as a DSL signal of a subscriber line, and an I/O port - referred to as the local port - adapted to terminate an electrical or optical signal from the service terminal ST. In the preferred embodiment of the present invention, the local port terminates an Ethernet signal, such as a 10 Base T Ethernet signal.

The network termination NT accommodates the necessary means for operating - i.e. originating, terminating or relaying - the data planes, the control planes and the management planes at each and every I/O ports and at each and every protocol layers.

None of the foregoing components is shown for reasons of readability.

More specifically and with respect to the scope of the present invention (see fig. 2), the network termination NT further comprises an Ethernet Bridge FW2 adapted to forward Ethernet frames from the local port to a VC of the network port, and vice versa.

The Ethernet bridge FW2 makes use of an Ethernet table comprising at least the following pieces of information:
- the destination MAC address of the incoming frames,
- the source MAC address of the incoming frames,
- the VLAN identity of the incoming frames,
- the ToS value of the incoming frames,
- the identity of a port whereto the incoming frames shall be forwarded,

**Table 1:**

| Example of a Ethernet Table | | | | |
|---|---|---|---|---|
| **dest. MAC @ (self learned)** | **source MAC @** | **VLAN** | **ToS** | **dest. port** |
| @_ST | - | - | - | local port |
| @_subscriber_port_N2 | - | - | - | VPI/VCI_CC2 |
| @_network_port_AS | @_ST | - | - | VPI/VCI_P |

Whenever an Ethernet frame is received, the Ethernet bridge FW2:
- excerpts the relevant information from the frame,
- scans through the Ethernet table for the closest match,
- forwards the frame to the mentioned destination port.

A parameter that is left empty is considered as not relevant in the forwarding decision. The forwarding criteria shall be mutually exclusive, so as the forwarding decision is unequivocal.

The network termination NT further comprises local management means MGT2 interfacing via the control channel CC1 with the local management means MGT1 of the leaf node N2. The local management means MGT2 retrieve configuration data from their peer and configures the network termination NT accordingly. This includes the update of the Ethernet table, such as adding a new entry, deleting an existing entry, updating an existing entry, etc.

The access server AS is adapted to couple the service provider SP to the telecommunication network NET.

The access server AS comprises an I/O port - referred to as the network port - adapted to terminate an electrical or optical signal from the telecommunication network NET, such as a STM-1 electrical signal, and an I/O port - referred to as the local port - adapted to terminate an electrical or optical signal from the service provider SP.

The access server AS accommodates the necessary means for operating - i.e. originating, terminating or relaying - the data planes, the control planes and the management planes at each and every I/O ports and at each and every protocol layers.

The access server AS houses a local agent for carrying out management operations upon request from a network manager. The access server AS implements a management interface to receive requests from a network manager and to send confirmation or autonomous reports to a network manager. An appropriate protocol suite supports that interface.

None of the foregoing components is shown for reasons of readability.

More specifically and with respect to the scope of the present invention (see fig. 2), the access server AS further comprises an IP router FW1 adapted to route IP packets from the local port to a VC of the network port, and vice versa.

The IP router FW1 makes use of a routing table comprising at least the following pieces of information:
- the destination IP address of the incoming packets,
- the subnet mask to apply to the destination IP address,
- the DiffServ Code Points (DSCP) of the incoming packets,
- possibly, the gateway IP address whereto the packets shall be sent,
- the identity of a port whereto the packets shall be routed.

**Table 2:**

| Example of a Routing Table | | | | |
|---|---|---|---|---|
| **dest. IP @** | **Subnet mask** | **DSCP** | **gateway IP @** | **dest. port** |
| default | - | - | @_gateway_SP | local port |
| @_ST | 0xFFFFFFFF | - | - | VCI/VPI_P |
| | | | | |

Whenever an IP packet is received, the IP router:
- excerpts the relevant information from the packet,
- scans through the routing table for the closest match,
- forwards the packet to the mentioned destination port.

A parameter that is left empty is considered as not relevant in the routing decision. The routing criteria shall be mutually exclusive, so as the routing decision is unequivocal.

The network controller CTRL is adapted to:
- establish communication paths across the telecommunication network NET,
- configure the routing table of the access server AS,
- supply forwarding criteria to the leaf node N2, said forwarding criteria being ultimately relayed up to the network termination NT,
- auto-configure the service terminal NT (DHCP server).

The network controller CTRL is a computing station comprising a Pentium IV processor supplied by Intel Corp, as well as all the necessary hardware as known to the skilled person, such as random access memory, a hard disk, an interruption controller, a DMA controller, a graphic card, I/O peripherals. The computing station may be coupled to a keyboard, a monitor, a mouse, or any other means used to interface with an operator.

In the preferred embodiment, the network controller CTRL establishes communication paths by making use of the above defined management interface provisioned in the network elements of the telecommunication network NET. The network controller CTRL implements the protocol suite applicable to that interface.

In the preferred embodiment, the network controller CTRL only addresses the leaf node N2 and is coupled thereto via a dedicated VC VC1.

In the preferred embodiment, the network controller CTRL configures the routing table of the access server AS by making use of the above defined management interface provisioned in the access server AS. The network controller CTRL implements the protocol suite applicable to that interface.

The network controller CTRL accommodates storage means to hold a local replica of the MIB. This local MIB includes at least the resources of interest with respect to:
- the function of establishing communication paths across the telecommunication network NET,
- the function of configuring the routing table of the access server AS.

The network controller CTRL embeds the function of a DHCP server. The network controller CTRL may also interact with a physically dissociated DHCP server. Before going further in the auto-configuration procedure, the network controller CTRL asks the authentication server AUTH to authenticate the subscriber.

In the preferred embodiment, the network controller CTRL is coupled to the authentication server AUTH via an IP based network. The network controller CTRL implements the TCP/IP protocol suite applicable to that interface.

None of the foregoing components is shown for reasons of readability.

The authentication server AUTH is adapted to:
- grant or to deny a subscriber the access to a service,
- request the network controller CTRL to establish a path across the telecommunication network NET,
- supply information elements to the network CTRL for establishing said path,
- supply forwarding criteria to the network controller CTRL, said forwarding criteria being ultimately relayed up to the network termination NT and the access server AS,

The authentication server AUTH is a computing station, such as one of the above mentioned type.

The authentication server AUTH implements the applicable TCP/IP protocol suites to support communication with the network controller CTRL and the service provider SP.

The authentication server AUTH holds the data necessary for granting or denying the access to a service, for supplying information related to a given service instance, etc.

None of the foregoing components is shown for reasons of readability

In the following, the operation of the preferred embodiment will be described by reference to the service terminal ST requesting a service S from the service provider SP.

Originally, the control channels CC1 and CC2 have been provisioned between the network termination NT and the leaf node N2. The configuration of the network termination NT is assumed to be achieved via ILMI. No forwarding criteria is associated with those channels.

The service terminal ST starts establishing a session with the service provider SP. The service terminal ST sends a DHCP_discover message wherein the following elements are specified:
- the name of the service provider SP,
- the name of the requested service S,
- the subscriber's user name,
- a credential.

The DHCP_discover message contains the MAC broadcast address as destination MAC address. Therefore, the network termination NT forwards the message to all the equipped VCs, excluding the control channel CC1, which is reserved for ILMI traffic.

The relay means REL in the leaf node N2 intercept the DHCP_discover message on the control channel CC2 and transmit it via the VC VC2 to the network controller CTRL for further handling. The relay means REL append to the message the physical I/O port - the subscriber port - from which the message has been received.

The network controller CTRL stores those data for further retrieval. It then asks the authentication server AUTH whether or not the subscriber can access the requested service S. A common reference is acknowledged between the network controller CTRL and the authentication server AUTH that will be subsequently used to unambiguously identify this service session, and implicitly the service terminal ST.

If the service S is granted, the authentication server AUTH provides the network controller CTRL back with a public IP address belonging to the IP domain of the service provider SP, and all the related IP configuration data, such as a subnet mask, the IP address of the access server AS as gateway address, a name of a Domain Name Server (DNS), etc.

The authentication server AUTH provides the network controller CTRL with information elements I for establishing a path between the network termination NT and the access server AS. The information elements I are the ATM address of the access server AS in the telecommunication network NET and the transport parameters of the requested path.

The authentication server AUTH provides also the network controller CTRL with forwarding criteria CR1 and CR2 to be used in the access server AS and the network termination NT respectively.

The IP configuration data are enclosed by the network controller CTRL in a DHCP_offer message and are forwarded up to the service terminal ST.

The received DHCP_offer message gets as source MAC address the MAC address of the leaf node N2's port whereto the network termination NT is coupled.

Upon receipt of the DHCP_offer message, the Ethernet bridge FW2 leans this source MAC address as attached to the VC CC2 and updates the Ethernet table accordingly.

The message is then passed to the service terminal ST. The service terminal ST builds up a DHCP_request message with all the confirmed IP configuration data. The service terminal ST substitutes to the initial broadcast address the source MAC address of the DHCP_offer message.

The DHCP_request message is forwarded by the network termination NT to the VC CC2, and relayed by the leaf node N2 to the network controller CTRL.

Upon receipt of the DHCP_request message from the service terminal ST, the network controller CTRL requests the leaf node N2 via the VC VC1 to set up a soft PVC P between the network termination NT and the access server AS. The following parameters are specified:
- the identity of the subscriber port whereto the network termination NT is coupled, as retrieved locally,
- the ATM address of the access server AS, as specified by the authentication server AUTH,
- the ATM service category and the ATM transport capabilities of the VC P, as specified by the authentication server AUTH (possibly after translation by the network controller CTRL)
- the VPI/VCI to be used at both NT/N2 and N1/AS interface.

The forwarding criteria CR2, which shall be relayed via the control channel CC1 to the network termination NT, are enclosed in that request. The forwarding criteria CR2 may also be send in a subsequent message.

The leaf node N2 sets up a VC up to the access server AS by issuing a connection set up message to one of its adjacent nodes. The VPI/VCI value to be used at the N1/AS interface is conveyed transparently up to the access server AS in a specific ATM signalling Information Element (Called party soft PVCC as defined page 202 of the document entitled "Private Network-Network Interface Specification Version 1.0 (PNNI 1.0)", reference af-pnni-0055.000, published by the ATM forum in March 1996).

Next, the leaf node N2 sets up a second VC on the mentioned subscriber port with the mentioned VPI/VCI value.

Finally, the leaf node N2 updates its switching table to bind these 2 VCs.

Upon completion of the connection set up scenario and provided the outcome was successful, the leaf node N2 registers the VC P and the associated forwarding criteria CR2 in its local MIB.

The leaf node N2 triggers the local management means MGT1 to resynchronize the network termination NT via ILMI. The local management means MGT1 retrieves the new configuration data from the local MIB, wherein the new VC P is registered with CR2 as associated forwarding criteria, and sends them to the local management means MGT2.

The local management means MGT2 receives the new configuration data and updates the Ethernet table accordingly. In this Ethernet table, the MAC address of the service terminal ST is associated with the VC P (see table 1).

Once the VC P has been established and the network termination NT has been synchronized, the leaf node N2 sends a confirmation back to the network controller CTRL.

Upon receipt of that confirmation, the network controller CTRL configures the routing table of the access server AS using interalia the forwarding criteria CR1 supplied by the authentication server AUTH. In this routing table, the IP address of the service terminal ST is associated with the VC P (see table 2).

Finally, the network controller CTRL sends a DHCP_answer message back to the service terminal ST, thereby completing the auto-configuration of the service terminal ST and allowing the service terminal ST to starts exchanging traffic with the service provider SP.

The first message initiated by the service terminal ST is an ARP_request, with as queried IP address the gateway IP address mentioned in the DHCP_offer message, that is to say the IP address of the access server AS. This message is broadcasted to all the equipped VCs, i.e. to CC2 and to P. The access server AS recognizes its own IP address and answers the associated MAC address over the VC P. This MAC address is learnt by the Ethernet bridge FW2 and is registered in the Ethernet table associated with the VC P (see table 1). All the subsequent traffic exchanged with the service provider SP will be forwarded to the VC P, until further notification via ILMI.

In the reverse direction, the access server AS routes all the traffic bound to the IP address of the service terminal ST to the path P.

The network controller CTRL may send to the authentication server AUTH some message indicating that a path has been established between the subscriber and the service provider SP, e.g. for accounting said subscriber the use of the service S.

At that stage, the service terminal ST may request a new service from the service provider SP requiring some specific bandwidth and/or quality of service requirements that are not fulfilled by the current VC P.

If so, the service provider SP forwards the request to the authentication server AUTH for authentication and further configuration. The authentication checks whether or not the subscriber is allowed to access the new service. The subscription profile of that subscriber is retrieved by using the IP address of the service terminal ST enclosed in the request. From the IP address, the original user name and the related subscription data are retrieved.

If the service is granted, the authentication server AUTH requests the network controller CTRL to establish a new path between the network termination NT and the access server AS, e.g. a real time Variable Bit Rate (rt-VBR) path for downloading a high definition video. The foregoing common reference is enclosed in the request, allowing the network controller CTRL to retrieve therefrom some local data necessary for establishing the requested path, such as the leaf node N2's port whereto the network termination NT is coupled, etc.

The authentication server AUTH supplies the network controller CTRL with the information elements and the forwarding criteria to be used for that path. Referring to the rt-VBR example, the forwarding criteria would include the corresponding ToS and DSCP values, allowing the network termination NT and the access server AS to discriminate this type of traffic from another.

The above described scenario applies, with the exception that the network controller CTRL sends a confirmation back to the authentication server AUTH upon completion of the requested task.

The authentication server AUTH may also request the network controller CTRL to re-dimension an existing path, e.g. if a second video file is requested while the first one is still being downloaded.

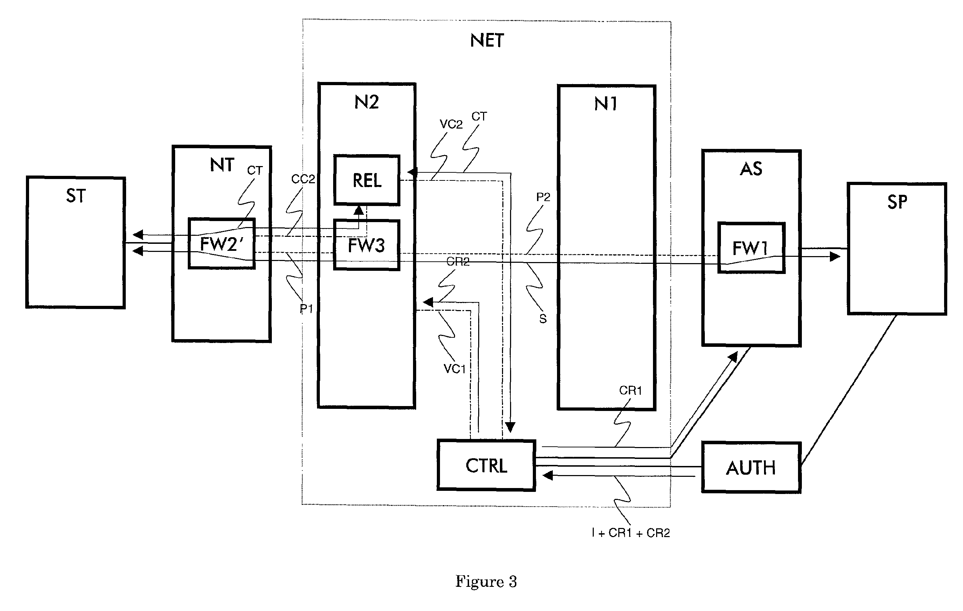

In an alternative embodiment of the present invention (see fig. 3), a PVC P1 is provisioned between the network termination NT and the leaf node N2.

The network termination NT comprises forwarding means FW2' that keep on forwarding the traffic as usual, e.g. an Ethernet bridge forwarding Ethernet frames based on the destination MAC address only.

The dispatching of the subscriber's traffic to the right path is taken over by the leaf node N2. The leaf node N2 comprises an Ethernet bridge FW3 that functionally operates like the above described Ethernet bridge FW2 in the network termination NT.

The local agent of the leaf node N2 is adapted to modify the Ethernet table of the Ethernet bridge FW3 upon request from the network controller CTRL. The local management means MGT1 and MGT2, and the associated control channel CC1, are no longer necessary as far as the present invention is concerned.

The most noticeable differences with the above described scenario are the following:
- The network controller CTRL requests the leaf node N2 to set up a soft PVC P2 up to the access server AS.
- The network controller CTRL provides the leaf node N2 with:
   - the subscriber port whereto the network termination NT is coupled,
   - the VPI/VCI of the PVC P1, from which traffic must be forwarded to the VC P2,
   - the forwarding criteria CR2 to apply.
- The leaf node N2 does not set up any VC on the mentioned subscriber port. It uses the foregoing parameters to forward traffic conveyed over the VC P1 and matching the forwarding criteria CR2 to the VC P2.

In an alternative embodiment of the present invention, a PVP is provisioned between the leaf node N2 and the access server AS. The end to end connection between the leaf node N2 and the access server AS is achieved by addressing both the leaf node N2 and the access server AS and by requesting them to set up a PVC with a common identifier within that PVP. There may be as many PVPs provisioned between the leaf node N2 and the access server AS as there are ATM service categories to serve.

In an alternative embodiment of the present invention, the DHCP server function is moved from the network controller CTRL to the authentication server AUTH. The destination IP address filled in by the leaf node N2 is changed accordingly. Upon receipt of a DHCP message, the network controller CTRL checks the destination IP address and forwards the message to the authentication server AUTH for further handling. The authentication server AUTH may also be coupled directly to the leaf node N2, e.g. via a dedicated VC or via an IP based network.

In an alternative embodiment of the present invention, the network controller CTRL does not have direct interface to the access server AS. The network controller CTRL either addresses the access server AS via the authentication server AUTH or lets the latter configuring itself the routing table of the access server AS. In that case, the forwarding criteria CR1 need no longer to be passed to the network controller CTRL.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A method for establishing a connection (C) between a service terminal (ST) and a service provider (SP) across a telecommunication network (NET),
said telecommunication network comprising:
- a root node (N1), said service provider being coupled via an access server (AS) thereto,
- a leaf node (N2), said service terminal being coupled via a network termination (NT) thereto,
said method comprising the steps of:
- establishing a path (P) across said telecommunication network between said network termination and said access server,
- forwarding in said access server traffic related to said service terminal to said path,
- forwarding in said network termination traffic related to said service provider to said path,
**characterized in that** said path is established in the event of said service terminal requesting a service (S) from said service provider and on condition that an authentication server (AUTH) has granted said service terminal the access to said service,
and **in that** said path is established according to information elements (I) supplied by said authentication server.

2. A method according to claim 1, **characterized in that** said information elements include any of the following parameters:
- a source address of said path
- a end address of said path.
- transfer capabilities of said path required for delivering said service to said service terminal with a pre-determined quality of service.

3. A method according to claim 1, **characterized in that** said method further comprises the step of transmitting forwarding criteria (CR2) via a control channel (CC1) to said network termination for said network termination to forward traffic related to said service to said path.

4. A method according to claim 3, **characterized in that** said forwarding criteria include any of the following parameters:
- a physical address of said service terminal,
- an identifier of a virtual local area network,
- an identifier of a class of service of said service.

5. A telecommunication network (NET) adapted to connect a service terminal (ST) to a service provider (SP),
said telecommunication network comprising:
- a root node (N1), said service provider being coupled via an access server (AS) thereto,
- a leaf node (N2), said service terminal being coupled via a network termination (NT) thereto,
said telecommunication network further comprises a network controller (CTRL) adapted to establish a path (P) across said telecommunication network between said network termination and said access server,
said access server comprising first forwarding means (FW1) adapted to forward traffic related to said service terminal to said path,
said network termination comprising second forwarding means (FW2, FW2') adapted to forward traffic related to said service provider to said path,
**characterized in that** said network controller is further adapted to establish said path in the event of said service terminal requesting a service (S) from said service provider and on condition that an authentication server (AUTH) has granted said service terminal the access to said service,
and **in that** said network controller is further adapted to establish said path according to information elements (I) supplied by said authentication server

6. A telecommunication network according to claim 5,
**characterized in that** said information elements include any of the following parameters:
- a source address of said path
- a end address of said path.
- transfer capabilities of said path required for delivering said service to said service terminal with a pre-determined quality of service.

7. A telecommunication network according to claim 5,
**characterized in that** said leaf node comprises local management means (MGT1) adapted to transmit forwarding criteria (CR2) via a control channel (CC1) to said network termination for said network termination to forward traffic related to said service to said path.

8. A telecommunication network according to claim 7,
**characterized in that** said forwarding criteria include any of the following parameters:
- a physical address of said service terminal,
- an identifier of a virtual local area network,
- an identifier of a class of service of said service.

9. A telecommunication network according to claim 5,
**characterized in that** a first path segment (P1) is provisioned between said network termination and said leaf node,
**in that** said network controller is adapted to establish a second path segment (P2) between said leaf node and said access server,
and **in that** said leaf node comprises third forwarding means (FW3) adapted to forward traffic conveyed over said first path segment and related to said service to said second path segment,
thereby establishing said path between said network termination and said access server.

10. A telecommunication network according to claim 5,
**characterized in that** said leaf node comprises relay means (REL) adapted to intercept control traffic (CT), said control traffic being forwarded to an appropriate destination.

11. A network controller (CTRL) of a telecommunication network (NET),
said telecommunication network connecting a service terminal (ST) to a service provider (SP) and comprising:
- a root node (N1), said service provider being coupled via an access server (AS) thereto,
- a leaf node (N2), said service terminal being coupled via a network termination (NT) thereto,
said network controller being adapted to establish a path (P) across said telecommunication network between said network termination and said access server,
**characterized in that** said network controller is further adapted to establish said path in the event of said service terminal requesting a service (S) from said service provider and on condition that an authentication server (AUTH) has granted said service terminal the access to said service,
and **in that** said network controller is further adapted to establish said path according to information elements (I) supplied by said authentication server.

12. A network controller according to claim 11, **characterized in that** said information elements include any of the following parameters:
- a source address of said path
- a end address of said path.
- transfer capabilities of said path required for delivering said service to said service terminal with a pre-determined quality of service.

13. An authentication server (AUTH) adapted to grant or deny a service terminal (ST) the access to a service (S) of a service provider (SP),
a telecommunication network (NET) connecting said service terminal to said service provider and comprising:
- a root node (N1), said service provider being coupled via an access server (AS) thereto,
- a leaf node (N2), said service terminal being coupled via a network termination (NT) thereto,
**characterized in that**, in the event of said service terminal being granted said service, said authentication server is further adapted to provide information elements (I) for establishing a path (P) across said telecommunication network between said network termination and said access server.

14. An authentication server according to claim 13,
**characterized in that** said information elements include any of the following parameters:
- a source address of said path
- a end address of said path.
- transfer capabilities of said path required for delivering said service to said service terminal with a pre-determined quality of service.

15. An authentication server according to claim 13,
**characterized in that**, in the event of said service terminal being granted said service, said authentication server is further adapted to provide forwarding criteria (CR2) for forwarding traffic related to said service to said path.

16. An authentication server according to claim 15,
**characterized in that** said forwarding criteria include any of the following parameters:
- a physical address of said service terminal,
- an identifier of a virtual local area network,
- an identifier of a class of service of said service.

17. A network termination (NT) adapted to couple a service terminal (ST) to a telecommunication network (NET),
a path (P) being established across said telecommunication network between said network termination and a service provider (SP),
said network termination comprising:
- forwarding means (FW2) adapted to forward traffic related to said service provider to said path,
- local management means (MGT2) adapted to get via a control channel (CC1) configuration data from said telecommunication network,
said service terminal requesting a service (S) from said service provider,
**characterized in that** said configuration data further includes forwarding criteria (CR2) for forwarding traffic related to said service to said path,
and **in that** said forwarding means are further adapted to forward traffic conforming with said forwarding criteria to said path.

18. A network termination according to claim 17, **characterized**
**in that** said forwarding criteria include any of the following parameters:
- a physical address of said service terminal,
- an identifier of a virtual local area network,
- an identifier of a class of service of said service.
